(19) Europäisches Patentamt

European Patent Office

Office européen des brevets

(11) EP 1 557 792 A2

(12) EUROPEAN PATENT APPLICATION

(43) Date of publication:
27.07.2005 Bulletin 2005/30

(51) Int Cl.⁷: $G06T\ 5/00$, G06F 19/00,
G06K 9/62

(21) Application number: 05250234.1

(22) Date of filing: 18.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 19.01.2004 JP 2004010825

(71) Applicant: Konica Minolta Medical & Graphic, Inc.
Tokyo 163-0512 (JP)

(72) Inventor: Kasai, Satosh
Hachioji-shi, Tokyo 192-8505 (JP)

(74) Representative: Rees, Alexander Ellison et al
Urquhart-Dykes & Lord LLP
30 Welbeck Street
London W1G 8ER (GB)

(54) **Medical image processing apparatus**

(57)    A medical image processing apparatus includes: an abnormal shadow candidate detecting section for discriminating an image area estimated as abnormal shadow in a medical image to be detected as an abnormal shadow candidate, by using a support vector machine using training data; and a detecting condition changing section for changing a detecting condition in the abnormal shadow candidate detecting section.

## FIG.1

**Description**

BACKGROUND OF THE INVENTION

Field of the Invention

The present invention relates to a medical image processing apparatus which detects a candidate area of abnormal shadow by analyzing a medical image.

Description of Related Art

In a medical field, digitization of a medical image in which an image of a patient is generated has been achieved. At the time of diagnosis, according to digital medical image data displayed on a display, a doctor performs an interpretation to detect abnormal shadow which appears to be a lesion part. These days, a medical image processing apparatus called a Computed-Aided Diagnosis (hereafter, it is referred to as CAD) apparatus which automatically detects an abnormal shadow candidate by processing a medical image for the purpose of reducing a burden on a doctor who interprets a medical image (hereafter, it is referred to as an interpretation doctor) and of reducing oversight of abnormal shadow is being developed (for example, see JP-Tokukai-2002-112986A).

In the above-mentioned CAD, in order to detect only true positive shadow which is a malignant lesion part, as an abnormal shadow candidate while excluding false positive shadow which is normal tissue or a benign lesion part, whether a candidate is true positive or false positive is judged by using feature which indicates characteristics of inside or circumference of the candidate area of detected abnormal shadow, and a candidate judged as false positive is deleted from a detection result.

What is used as its judging method is multivariate analysis which outputs conclusive judgment result in consideration of correlation of each feature with the use of sample data, called training data. For example, in a judgment analysis method using Mahalanobis distance, which is one type of multivariate analysis, the following processes are performed: First, a training data group regarding which whether each training data belongs to a category of true positive or false positive is known is previously prepared. Then, when data to be judged is inputted, whether the data is closer to a training data group of a true positive category or a training data group of a false positive category is judged in consideration of variance of the training data group of each category.

However, with the conventional multivariate analysis method, there is a case of having a large or small spread of distribution depending upon prepared training data, whereby unevenness of its discrimination accuracy is caused. Further, if true positive training data and false positive training data exist so as to share a distribution area of each other, the discrimination accuracy is lowered down.

Further, since a detecting condition for an abnormal shadow candidate conventionally is uniformly set regardless of an interpretation doctor, an identical detection result is obtained from an identical medical image. However, depending upon an interpretation doctor, for example, there is a request of detecting only true positive abnormal shadow, or a request of detecting all suspicious shadow regardless of detecting false positive shadow.

SUMMARY OF THE INVENTION

An object of the present invention is to improve detection accuracy of an abnormal shadow candidate and to make changing of a detecting condition of an abnormal shadow candidate possible.

In order to achieve the above-mentioned object, in accordance with a first aspect of the present invention, a medical image processing apparatus comprises: an abnormal shadow candidate detecting section for discriminating an image area estimated as abnormal shadow in a medical image for detecting the image area as an abnormal shadow candidate, by using a support vector machine using training data; and a detecting condition changing section for changing a detecting condition in the abnormal shadow candidate detecting section.

According to the above-mentioned apparatus, an abnormal shadow candidate is detected by using a support vector machine. Therefore, it is possible to set a nonlinear discrimination borderline, and thereby it is possible to improve discrimination accuracy. In other words, it is possible to improve detection accuracy of an abnormal shadow candidate. Further, since it is possible to change its detecting condition, it is possible for a user such as an interpretation doctor and the like to change a detecting condition according to his/her skill and interpretation style, whereby it is possible to adjust detection accuracy. Accordingly, it is possible to improve interpretation efficiency.

Preferably, the support vector machine determines a discrimination borderline between abnormal shadow and normal shadow based on the training data by using a discrimination function y which is shown below as an equation 1, and discriminates whether the image area which is a discrimination object is abnormal shadow or normal shadow based on the discrimination borderline, and the detecting condition changing section changes a threshold h which determines the discrimination function y in the support vector machine, as a detecting condition,

$$y = sign(\sum_{i \in S} \alpha_i t_i x_i^T x - h)$$

equation 1

where $x_i$ is training data determined as a support vector, $\alpha_i$ is a constant calculated by a Lagrange multiplier which is introduced when the support vector is to be calculated, and h is a threshold for parallelly moving the discrimination borderline.

According to the above-mentioned apparatus, a threshold h in a discrimination function y of the support vector machine is changed as a detecting condition. Therefore, it is possible to adjust the detection accuracy by parallelly moving the discrimination borderline.

Preferably, the detecting condition changing section calculates an index value indicating a spreading degree of a distribution of the training data with respect to each category under an assumption that a distribution of the training data belonging to a normal shadow category and a distribution of the training data belonging to an abnormal shadow category are normal distributions, and determines changing amount of the threshold h of the discrimination function y indicated in the equation 1 based on the index value.

According to the above-mentioned apparatus, by assuming the distribution of training data belonging to a category of normal shadow and the distribution of training data belonging to a category of abnormal shadow as a normal distribution, changing amount of a threshold h is determined based on an index value indicating a spreading degree of the distribution. Therefore, it is possible to set a discrimination borderline in consideration of a distribution state of training data, without having to simply set a discrimination border in the middle of a margin area. For example, while a distribution of training data of one category is wide and a distribution of training data of another category is narrow, if a discrimination border is moved toward the side of the category having narrower distribution, discrimination accuracy is improved, and if a discrimination border is moved toward the side of the category having wider discrimination, discrimination accuracy is lowered. Accordingly, when a detecting condition is to be changed, it is possible to set an optimal discrimination borderline according to objective detection accuracy based on the distribution state.

Preferably, the index value indicating a spreading degree of a distribution is obtained based on a variance of the distribution.

According to the above-mentioned apparatus, an index value indicating a spreading degree of the distribution is obtained based on a variance calculated from a mean of the distribution. Therefore, it is possible to change a detecting condition in consideration of a variance of training data.

Preferably, the support vector machine uses a kernel trick and determines a discrimination borderline by using a discrimination function y indicated by a following equation 2, the discrimination function y comprising a kernel function K,

$$y = sign(\sum_{i \in S} \alpha_i t_i K(x_i, x) - h)$$

equation 2.

According to the above-mentioned apparatus, the support vector machine uses the kernel trick. Therefore, even if it is not possible to linearly discriminate due to the complicity of distribution of training data, such as the case that training data of each category exists in another category beyond a discrimination borderline, it is possible to set a nonlinear discrimination borderline, whereby it is possible to improve discrimination accuracy for discriminating whether it is abnormal shadow or normal shadow. Accordingly, it is possible to improve detecting accuracy of an abnormal shadow candidate even more.

Preferably, the kernel function is a Gauss kernel indicated by a following equation 3, and the detecting condition changing section changes a kernel parameter p in the kernel function as a detecting condition,

$$K(x_1, x_2) = \exp\left(\frac{-\|x_1 - x_2\|^2}{2p^2}\right)$$

equation 3

where p is the kernel parameter, and $x_1$ and $x_2$ are feature vectors.

According to the above-mentioned apparatus, Gauss kernel is used as a kernel function. Therefore, it is possible to do the discrimination in consideration of a variance of training data. Further, since a kernel parameter p is changed as a detecting condition, it is possible to change a detecting condition in consideration of a variance of training data.

Preferably, the apparatus further comprises a constructing section, wherein, when the training data determined as a support vector with respect to each category by the support vector machine is compared with another training data, if the training data determined as the support vector exists out of a distribution area of another training data, the constructing section deletes the training data determined as the support vector, calculates the support vector and the discrimination function, and constructs the support vector machine.

According to the above-mentioned apparatus, the support vector machine is re-constructed so as to delete teacher data thereof existing out of a distribution area of another training data. Therefore, even if an inappropriate data such as noise or the like exists in teacher data groups, it is possible to prevent the inappropriate training data from becoming a support vector which can affect discrimination accuracy. Accordingly, it is possible to prevent discrimination accuracy of the support vector machine from being lowered down due to the noise or the like.

Preferably, the constructing section calculates a distance from the training data determined as the support vector to another training data in consideration of each distribution, and if the calculated distance is not less than a predetermined value, the constructing section judges that the training data determined as the support vector exists out of the distribution area of another training data.

According to the above-mentioned apparatus, if a distance from teacher data determined as a support vector to another teacher data in consideration of a variance is not less than a predetermined value, the teacher data determined as a support vector is judged to exist out of a distribution area of another teacher data. Therefore, it is possible to designate teacher data determined as a support vector existing out of a distribution area of another teacher data to be deleted.

Preferably, the teacher data with respect to each category is assumed as a normal distribution, the constructing section calculates a mean and a variance of the normal distribution, and the constructing section judges whether the training data determined as the support vector exists out of a distribution area of another training data based on the calculated mean and variance.

According to the above-mentioned apparatus, by assuming a distribution of teacher data as a normal distribution, whether teacher data determined as a support vector exists out of a distribution area of another teacher data based on a mean and a variance of the normal distribution. Therefore, it is possible to designate teacher data determined as a support vector existing far from the center of the distribution to be deleted.

BRIEF DESCRIPTION OF THE DRAWINGS

The present invention will become more fully understood from the detailed description given hereinafter and the accompanying drawing given by way of illustration only, and thus are not intended as a definition of the limits of the present invention, and wherein:

FIG. 1 is a view showing an internal structure of a medical image processing apparatus in the present embodiment,
FIG. 2 is a flowchart illustrating SVM constructing process executed by a CPU,
FIG. 3 is a view showing a distribution diagram of training data which belong to either an abnormal shadow category or a normal shadow category,
FIG. 4A is a view showing training data corresponding to an optimal solution $\alpha_i^*=0$,
FIG. 4B is a view showing training data corresponding to an optimal solution $\alpha_i^*$ when $0<\alpha_i^*<\gamma$,
FIG. 4C is a view showing training data corresponding to an optimal solution $\alpha_i^*=\gamma$,
FIG. 5A is a conceptual view showing a method to judge whether training data as SV is appropriate or inappropriate, based on a distance in consideration of variance,
FIG. 5B is a conceptual view showing a method to judge whether training data as SV is appropriate or inappropriate, with the distribution of training data assumed as normal distribution,
FIG. 6 is a flowchart illustrating a detecting condition changing process according to a manual change, performed by the medical image processing apparatus,
FIG. 7 is a view showing a screen example for changing a detecting condition, and
FIG. 8 is a flowchart illustrating a detecting condition changing process according to an automatic change, performed by the medical image processing apparatus.

PREFERRED EMBODIMENTS OF THE INVENTION

In the present embodiment, what will be described is the example that Support Vector Machine (hereafter, it is referred to as SVM) is applied to a multivariate analysis method for judging at the time of detecting an abnormal shadow candidate from a medical image, whether it is discriminated as an abnormal shadow category or a normal shadow category with the use of image feature calculated in its candidate area.

First, a structure of the present embodiment will be described.

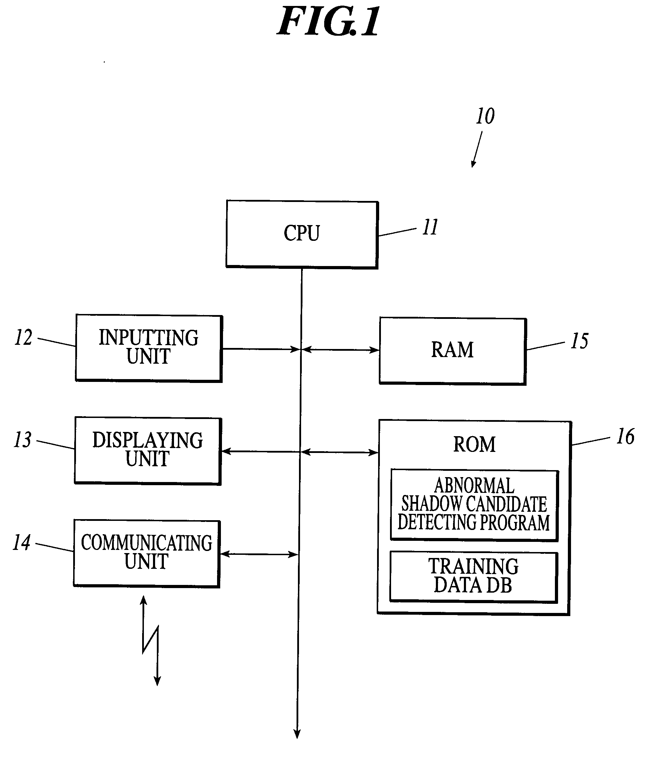

FIG. 1 shows an internal structure of a medical image processing apparatus 10 in the present embodiment.

As shown in FIG. 1, the medical image processing apparatus 10 comprises a CPU (Central Processing Unit) 11, an inputting unit 12, a displaying unit 13, a communicating unit 14, a RAM (Random Access Memory) 15 and a ROM (Read Only Memory) 16.

The CPU 11 develops a system program stored in the ROM 16 and an abnormal shadow candidate detecting program into RAM 15, and centrally controls each unit of the medical image processing apparatus 10 in conjunction with the programs.

In the abnormal shadow candidate detecting process, through a first detection for identifying a candidate area and a second detection over the identified candidate area, a conclusive detection result is outputted.

Hereinafter, in regard to a detecting method of an abnormal shadow candidate, description will be made by illustrating the example that a mass shadow candidate which is a finding of breast cancer is detected from an X-ray medical image in which a mamma of a patient is radiographed (hereafter, it is referred to as mammography). However, when an abnormal shadow candidate of each lesion type is to be detected from another image type of medical image such as an ultrasonogram, an MRI (Magnetic Resonance Imaging) image and the like, it is also possible to apply a detecting method corresponding to its image type and its lesion type.

Mass shadow has a shape similar to a circle, and appears on mammography as low density shadow having a type of density change in Gaussian distribution. Based on such characteristic density property, at the first detection, as disclosed in JP-Tokukaihei-08-263641A for example, intensity component and direction component of density gradient which lies from the circumference of a pixel of interest to the pixel of interest are calculated as feature by using the Iris filter, and a candidate area is identified based on the calculated feature. The candidate identified by the first detection is referred to as a first candidate.

Here, it is also possible to apply other known detecting methods, such as a method using the Laplacian filter (IEICE transactions (D-II), Vol.J76-D-II,no.2,pp.241-249,1993) and the like, as this method.

At the second detection, various features of the first candidate area, such as contrast, standard deviation, mean density value, curvature, fractal dimension, circularity, dimension, etc are calculated. Then, the calculated features are inputted as judgment target data to SVM constructed based on the training data groups that are previously stored in a training data database (hereafter, it is referred to as DB) of the ROM 16, and whether the judgment target data belongs to an abnormal shadow category or a normal shadow category is judged. The SVM determines a discrimination borderline for discriminating each category based on distribution of the training data groups each of which belongs to either of the two categories, and discriminates which category the judgment target data belongs to, according to the determined discrimination borderline. According to a result of the discrimination from the SVM, only a first candidate which is judged to belong to an abnormal shadow category is outputted as a conclusive detection result of an abnormal shadow candidate through the first detection and the second detection. In other words, by the combination of the abnormal shadow candidate detecting process program and the CPU 11, it is possible to realize the abnormal shadow candidate detecting section.

At the initial settings of training data, the CPU 11 reads out SVM constructing process program from the ROM 16 and executes SVM constructing process. In the SVM constructing process, first, training data to be a Support Vector (hereafter, it is referred to as SV) which determines a discrimination function of the discrimination borderline is calculated with respect to each category based on the training data groups. Then, based on the training data determined as SV, SVM is constructed by calculating an optimal discrimination function having the highest discrimination accuracy that has the largest margin area (an area where training data does not exist around the discrimination borderline). At this time, whether the training data determined as SV is an appropriate SV is judged, and if it is judged as an inappropriate SV, the training data judged as an inappropriate SV is deleted, and SV and a discrimination function are re-calculated.

Further, if a user gives an instruction to change a detecting condition, the CPU 11 reads out a detecting condition changing process program from the ROM 16 and executes a detecting condition changing process. Changes of a detecting condition includes a manual change according to which a user by himself/herself specifies a detecting condition to be changed to, and an automatic change according to which the medical image processing apparatus 10 automatically changes to an optimal detecting condition.

In the detecting condition changing process according to the manual change, a kernel parameter of a kernel function to be used in the discrimination function and a changing screen for changing a threshold in the discrimination function are displayed on the displaying unit 13. Then, SVM is re-constructed by calculating the discrimination function based on a value of the kernel parameter designated on the changing screen, and a threshold designated on the changing screen is set to the newly-calculated discrimination function. Further, in the detecting condition changing process according to the automatic change, an index value indicating the spread of distribution, such as mean, variance, standard deviation and the like, is calculated while assuming the distribution of the training data groups belonging to each category as normal distribution, and changing amount of the threshold in the discrimination function is determined based on the index value. Then, a threshold which has been changed as much as the determined changing amount is set to the discrimination function for re-constructing SVM.

In other words, by the combination of the SVM constructing process program, the detecting condition changing process program and the CPU 11, it is possible to realize the detecting condition changing section and the constructing section.

The inputting unit 12 comprises a keyboard having cursor keys, numeric keys and various function keys, and a pointing device such as a mouse, a touch panel or the like. The inputting unit 12 outputs an operation signal corresponding to a pushed key or a mouse operation to the CPU 11.

The displaying unit 13 comprises an LCD (Liquid Crystal Display) or the like, and displays a medical image, a detection result of an abnormal shadow candidate by the CPU 11, and various display screens such as a changing screen for changing a detecting condition, and the like.

The communicating unit 14 comprises a communications interface such as a Network Interface Card (hereafter, it is referred to as NIC), a modem, a terminal adapter or the like, and transmits/receives various information to/from an external device on a communication network. For example, the communicating unit 14 may be connected to an interpretation terminal located in each diagnosis room for transmitting a detection result of an abnormal shadow candidate.

Further, the communicating unit 14 is connected to a medical image generating apparatus (illustration omitted) so as to establish telecommunication, and receives image data of a medical image from the medical image generating apparatus.

Here, inputting of a medical image is not limited to the way with telecommunication. For example, an interface to be connected to a medical image generating apparatus may be provided, so that through this interface, a medical image generated by the medical image generating apparatus is inputted to the medical image processing apparatus 10.

As the medical image generating apparatus, it is possible to apply, for example, a laser digitizer which reads a medical image by scanning a laser beam over a film in which the medical image is recorded, a film scanner which reads a medical image recorded in a film with a sensor comprising a photoelectric transducer such as a CCD (Charge Coupled Device), etc.

Further, a method to input a medical image is not in particular limited to reading a medical image recorded in a film. For example, it is possible to have a structure where a radiographing apparatus which radiographs a medical image with accumulative phosphor, a flat panel detector comprising a radiation detecting device and a condenser and generating electric charge corresponding to intensity of irradiated radiations, or the like is connectable to the medical image processing apparatus 10.

The RAM 15 forms a work area for temporarily storing various programs executed by the CPU 11, data processed by these programs, etc.

The ROM 16 stores the system program, the abnormal shadow candidate detecting program, the SVM constructing process program, the detecting condition changing process program, data processed by each program, a training data DB for storing training data groups to be used at the time of detecting an abnormal shadow candidate, etc. Further, the ROM 16 stores image data groups of medical images to be processed, and various data that is necessary for detecting an abnormal shadow candidate, such as a discrimination function and various parameters set in SVM, and the like.

Next, an operation in the present embodiment will be described.

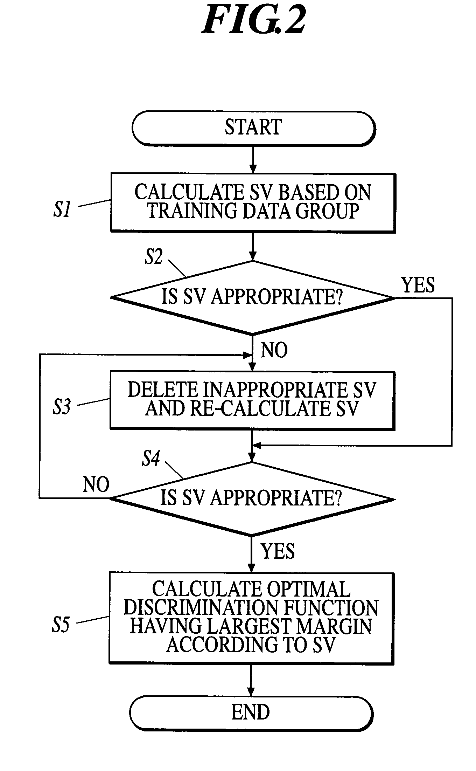

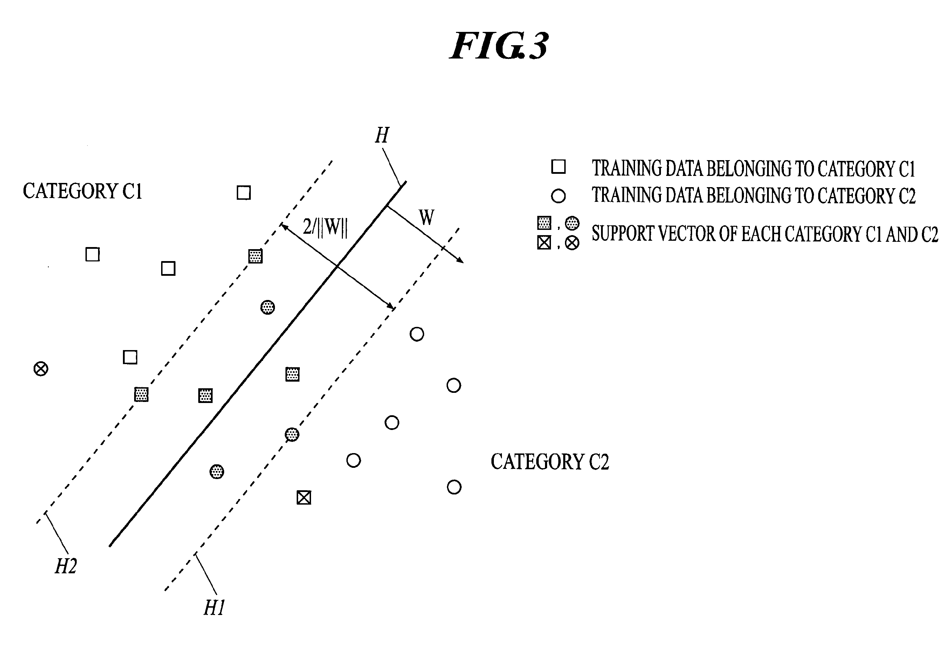

First, with reference to FIG. 2 and FIG. 3, a method to construct SVM used at the time of detecting an abnormal shadow candidate will be described. FIG. 2 is a flowchart illustrating SVM constructing process steps executed by the CPU 11.

By the way, details of Support Vector Machine are disclosed in "The Nature of Statistical Learning Theory", V. N. Vapnik, Springer, New York, 1995.

FIG. 3 is a view showing an appearance of distribution of training data groups.

As shown in FIG. 3, training data groups which belong to either a category C1 of abnormal shadow or a category C2 of normal shadow are distributed (in FIG. 3, training data of the category C1 is shown as □, and training data of the category C2 is shown as ○). In general, if each category can be linearly separated, a plurality of discrimination borderline planes H which correctly discriminate training data (hereafter, it is referred to as a discrimination plane) exist. Among these plurality of discrimination plane candidates, a discrimination plane having the largest margin area in which training data does not exist around its discrimination plane (candidates at the borders of the margin area are defined as hyperplanes H1 and H2) is the most accurate one to discriminate each category. A discrimination function indicating the discrimination plane having the largest margin area is determined by training data existing on the hyperplanes H1 and H2 (in FIG. 3, they are indicated by a circle filled with dots and a square filled with dots), that is, SV.

However, if each category cannot be linearly separated, there is the case that training data exists so as to penetrate into an area of the category C2 over the discrimination plane despite belonging to the category C1 (in FIG. 3, training data indicated by ○ or □ with × added within). In this case, it is effective to use a soft margin method which loosens a restriction condition so as to permit a certain amount of discrimination error. In the present embodiment, described is the case that an optimal discrimination function having the largest margin area is calculated according to the soft margin method.

In the SVM constructing process shown in FIG. 2, first, SV is calculated based on training data groups (Step S1).

A linear discrimination function y indicating a discrimination plane H is defined as the following equation 4, and a condition that n pieces of training data $x_i$ (i=1, 2, ..., n) should fulfill is defined as the following inequality 5:

$$(\text{equation 4}) \qquad y = sign\ (w^T x - h)$$

where
$w_i$: a parameter to determine discrimination function $y$,
$h$: a threshold to do the parallel shift of discrimination function $y$, and

$$sign\,(u): \begin{Bmatrix} 1(u > 0) \\ -1(u < 0) \end{Bmatrix}$$

$$(\text{inequality 5}) \qquad t_i\ (w^T x_i - h) \geqq 1$$

where $i=1, ..., N$

Here, it is assumed that labeling is performed so that a label of the category C1 is set to 1 and a label of the category C2 is set to -1 according to the function sign(u).

At this time, when training data penetrating into another category over the discrimination plane H exists, if the penetrating distance into another category is defined as $\xi_i / \| w \|$ by using a parameter $\xi_i$ ($\xi_i \geqq 0$), preferably the sum, which is $\Sigma$ ( $\xi_i / \| w \|$ ) with respect to i=1, ..., N is minimum. Therefore, with this state used as a restriction condition, a discrimination function y having the largest $2/\| w \|$, which is a distance between each of the hyperplanes H1 and H2 (margin area) is determined by calculating parameters w* and h* that make an objective function L(w) minimum. Such function L(w) is shown in the following equation 6:

$$(\text{equation 6}) \qquad L(w,\xi) = \frac{1}{2}\|w\|^2 + \gamma \sum_{i=1}^{N}\xi_i$$

where $\xi_i \geq 0$, $t_i\ (w^T x_i - h) \geq 1 - \xi_i (i = 1,...N)$ and parameter $v$ is constant

Here, if the Lagrange multipliers $\alpha_i$ and $v_i$ (i=1, ..., N) are introduced into the equation 6, the objective function L(w) can be replaced to a Lagrangian function $L_D$ as shown in the following equation 7:

$$(\text{equation 7})$$

$$L_D(w,h,\alpha,v) = \frac{1}{2}\|w\|^2 + v\sum_{i=1}^{N}\xi_i - \sum_{i=1}^{N}\alpha_i\left\{t_i\,(w^T x_i - h) - (1-\xi_i)\right\} - \sum_{i=1}^{N}v_i\xi_i$$

Here, if partial differential of the Lagrangian function is 0, the following equations 8 to 10 can be obtained:

$$(\text{equation } 8) \qquad w = \sum_{i=1}^{N} \alpha_i t_i x_i$$

$$(\text{equation } 9) \qquad 0 = \sum_{i=1}^{N} \alpha_i t_i$$

$$(\text{equation } 10) \qquad \alpha_i = \nu - \nu_i$$

If these equations 8 to 10 are substituted in the Lagrangian function $L_D$ in the above-mentioned equation 7, the following equation 11 can be obtained:

$$(\text{equation } 11) \qquad L_D(\alpha) = \sum_{i=1}^{N} \alpha_i - \frac{1}{2} \sum_{i,j}^{N} \alpha_i \alpha_j t_i t_j x_i^T x_j$$

$$\text{where} \quad \sum_{i=1}^{N} \alpha_i t_i = 0, \quad 0 \le \alpha_i \le \nu, \quad i = 1, \dots, N.$$

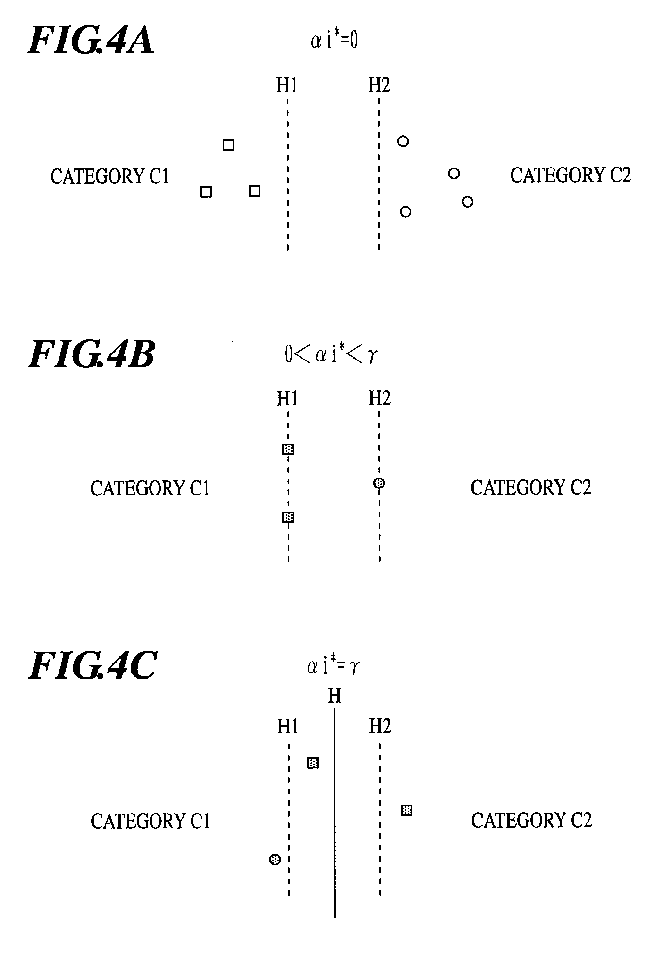

If an optimal solution of the equation 11 is $\alpha_i^*$, SV will be calculated according to this optimal solution $\alpha_i^*$. Concretely, training data $x_i$ corresponding to $\alpha_i^*$ which satisfies $\alpha_i^*=0$ is training data existing outside of the margin area as shown in FIG. 4A, that is, existing outside of the hyperplanes H1 and H2, and will be discriminated correctly. Further, training data $x_i$ corresponding to $\alpha_i$ which satisfies $0<\alpha_i^*<\nu$ exists on either one of the hyperplanes H1 and H2 that are defined by either $w^T x - h = 1$ or $w^T x - h = -1$ as shown in FIG. 4B, and will be discriminated correctly. In other words, training data $x_i$ corresponding to $\alpha_i^*$ which satisfies $0<\alpha_i^*<\nu$ is calculated as SV. Further, training data corresponding to $\alpha_i^*$ which satisfies $\alpha_i^* = \nu$ exists inside of the hyperplanes H1 and H2 as shown in FIG. 4C, and will be SV. If this training data exists between the discrimination plane H and either the hyperplane H1 or the hyperplane H2 at the belonging category side, it will be correctly discriminated. On the other hand, if it exists outside of the hyperplane H1 (or hyperplane H2) beyond the discrimination plane H, it will be incorrectly discriminated.

If data to be SV is calculated, whether the training data as SV is appropriate as SV or not is judged (Step S2). What is judged as inappropriate as SV is, for example, training data to be incorrectly discriminated, that is, training data existing in a distribution area of another category being out of a distribution area of training data groups of the belonging category, and the like. Training data which deeply penetrates into a distribution area for training data of another category beyond the hyperplanes H1 and H2 is training data which is treated as SV but is incorrectly discriminated. Since a discrimination function y relies on SV, using such inappropriate SV to construct a discrimination function y results in lowering down its discrimination accuracy. Therefore, before a discrimination function y is calculated, such inappropriate training data is deleted.

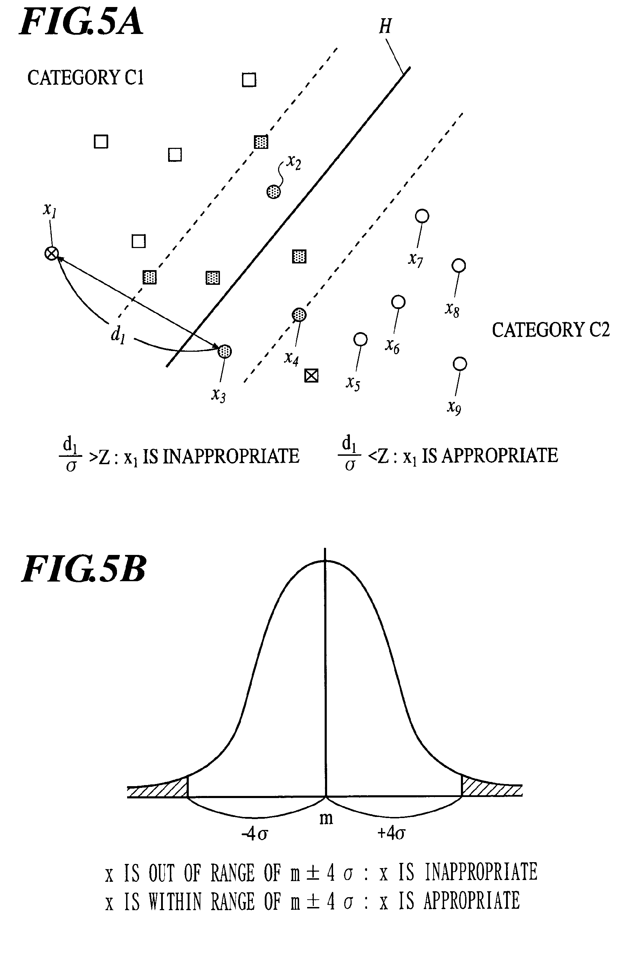

The judgment of whether it is appropriate or inappropriate is done in the following way: First, a distance between training data $x_s$ as SV (the suffix 's' is the set of suffix 'i' corresponding to SV) and training data $x_i$ being the closest to the training data $x_s$ among other training data $x_i$ belonging to the same category (regardless of whether it is SV or not) is calculated. For example, as shown in FIG. 5A, if training data $x_1$ as SV exists out of the distribution area of the belonging category, at first, a distance d1 from the closest training data $x_3$ is calculated. Then, whether a solution obtained by dividing the calculated distance d1 by a variance $\sigma$ of a training data group of its category is not less than a predetermined value z is judged, and if it is not less than the predetermined value z, this training data $x_1$ is judged as inappropriate SV. This judgment is sequentially done with respect to each training data $x_s$, and if there is SV judged as inappropriate (Step S2; N), the training data $x_s$ judged as inappropriate is deleted from the training data group. Then, based on the remaining training data $x_i$ after the training data judged as inappropriate SV is deleted, SV is re-calculated (Step S3).

Here, a method to judge whether SV is inappropriate or not is not limited to the above-mentioned method.

For example, by calculating a mean of distances from, from the closest $x_i$ to the fifth closest $x_i$ among training data $x_i$ of the same category, whether it is inappropriate or not may be judged based on a solution obtained by dividing the mean by a variance of the training data group of the same category.

Further, as shown in FIG. 5B, the judgment may be done in the following way: By assuming a distribution of training data $x_i$ of each category as a normal distribution, a mean and a variance thereof are calculated. Then, by defining these values as mean m and variance σ, for example, if training data $x_i$ to be judged exists out of a range $m$ ±4σ, it is judged as inappropriate.

Next, with respect to the re-calculated training data as SV, whether it is appropriate or inappropriate as SV is judged (Step S4). A method of the judgment is approximately the same as the above-mentioned one. If it is judged as inappropriate to be SV, SV is re-calculated after the training data judged as inappropriate is deleted.

Then, the calculation of SV is repeated until inappropriate SV is undetected. If all SV are ultimately judged as appropriate SV (Step S4; Y), with the use of optimal solution $\alpha_i^*$ $(0<\alpha_i^*{\leq}v)$ corresponding to training data $x_s$ judged as appropriate SV, an optimal parameter $w^*$ is calculated in the following equation 12, an optimal threshold $h^*$ is calculated in the following equation 13, and an optimal discrimination function $y$ is calculated in the following equation 14 (Step S5):

$$(\text{equation } 12) \qquad w^* = \sum_{i=1}^{N} \alpha_i^* t_i x_i$$

$$(\text{equation } 13) \qquad h^* = w^{*T} x_s - t_s$$

$$(\text{equation } 14) \qquad y = sign\left( \sum_{i \in S} \alpha_i^* t_i x_i^T x - h^* \right)$$

In other words, by using only few number of training data being close to the discrimination plane H, a discrimination function $y$ is constructed. At this time, the discrimination plane H indicated by the discrimination function $y$ is set at the center of the margin area. A threshold $h$ in the discrimination function is a constant to do the parallel shift of the discrimination plane H, and it is possible to adjust discrimination accuracy of the discrimination function $y$ by changing this threshold $h$.

Above is the description of a method of calculating an optimal discrimination function with the use of the soft margin method. However, if a distribution of training data becomes complicated and has a nonlinear discrimination borderline, a nonlinear discrimination function $y$ is calculated by using kernel trick. The kernel trick is used to convert a feature vector into high-dimensioned feature space according to nonlinear mapping and to perform a linear discrimination in the space.

Hereinafter, a calculating method of a nonlinear discrimination function with the use of kernel trick will be described.

Here, a nonlinear function being a mapping to convert training data $x_i$ into high-dimensioned space is defined as $\phi(x)$, a kernel function having two feature vectors as arguments is defined as $K(x_1,x_2)$ , and it is assumed that the following equation 15 is true:

$$(\text{equation } 15) \qquad \phi(x_1)^T \phi(x_2) = K(x_1,x_2)$$

Here, as the kernel function, it is possible to apply a known kernel function such as polynomial kernel, sigmoid kernel and the like. In the present embodiment, a Gauss kernel $K(x_1,x_2)$ shown in the following equation 16 is applied. In the equation 16, a kernel parameter p is a parameter defining variance.

$$(equation\ 16) \qquad K(x_1, x_2) = \exp\left(\frac{-\|x_1 - x_2\|^2}{2p^2}\right)$$

where p is a kernel parameter

If this Gauss kernel $K(x_1, x_2)$ is used, a nonlinear optimal discrimination function $y$ is obtained from the following equation 17 according to the equation 14. Discrimination accuracy of this discrimination function $y$ relies on the kernel parameter p which constructs the Gauss kernel $K$. At the initial point that SVM is constructed, it is assumed that a kernel parameter p is predetermined to the most discriminating to be set by a genetic algorithm or the like.

$$(equation\ 17) \qquad \begin{aligned} y &= sign(w^{*T}\phi(x) - h^*) \\ &= sign(\sum_{i \in S} \alpha_i^* t_i \phi(x_i)^T \phi(x) - h^*) \\ &= sign(\sum_{i \in S} \alpha_i^* t_i K(x_i, x) - h^*) \end{aligned}$$

When a discrimination function $y$ is calculated in this way, the discrimination function $y$ is set to SVM to be used at the time of detecting an abnormal shadow candidate.

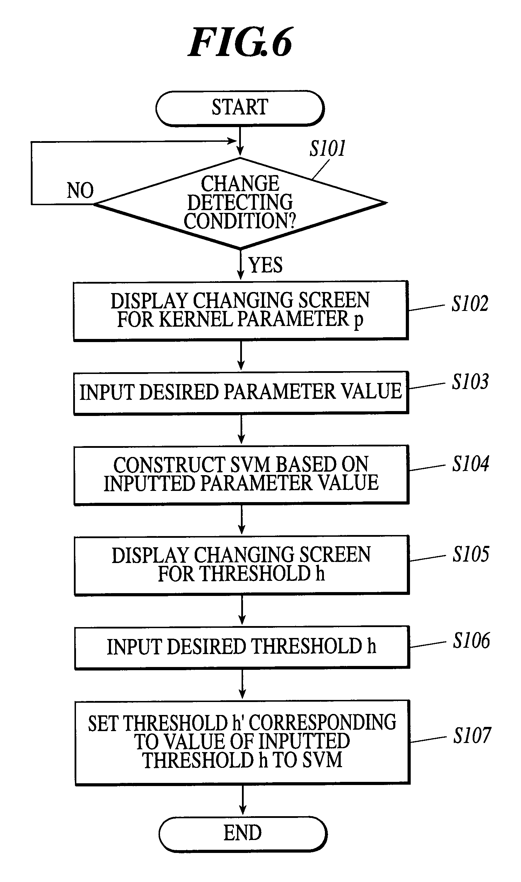

Next, the detecting condition changing process which changes a detecting condition of an abnormal shadow candidate to adjust its detection accuracy will be described. In regard to the change of a detecting condition, it is possible to perform a manual change which changes to a detecting condition specified by a user, and an automatic change which automatically changes a detecting condition in the medical image processing apparatus 10 according to a changing instruction from a user. First, with reference to FIG. 6, a detecting condition changing process according to a manual change will be described.

In the detecting condition changing process shown in FIG. 6, first, whether a manual change of a detecting condition is instructed from an environment setting menu is judged (Step S101). If a manual change of a detecting condition is instructed (Step S101; Y), a changing screen for changing a detecting condition is displayed on the displaying unit 13 (Step S102).

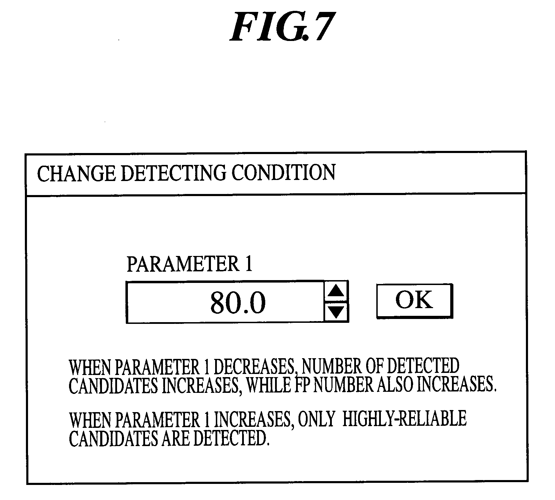

FIG. 7 shows an example of the changing screen. On this changing screen, it is possible to change a parameter of the kernel parameter. PARAMETER 1 in the changing screen shown in FIG. 7 is used to display a value which is a kernel parameter normalized between 1 and 100, so as to provide a user-friendly operation environment. A user operates the inputting unit 12 on the changing screen to set a parameter value, and if the user agrees with the set value, the user pushes the OK key.

When a desired parameter value is inputted on the changing screen by a user (Step S103), the inputted parameter value is converted into a corresponding actual kernel parameter p', and SVM is constructed based on the kernel parameter p' (Step S104). In other words, a discrimination function is re-calculated according to a kernel function $K$ to which the changed kernel parameter p' is set.

Next, a changing screen of a threshold $h$ is displayed on the displaying unit 13 (Step S105). This changing screen has approximately the same structure as the changing screen of a kernel parameter shown in FIG. 7. Therefore, illustration thereof is omitted. In other words, on the changing screen for a threshold $h$, a threshold h is displayed as a normalized value between 1 and 100 so as to be changeable. A user inputs a desired value of a threshold $h$ by operating the inputting unit 12, and if the user agrees with the value, the user pushes the OK key.

When a desired value after the change is inputted on the changing screen of a threshold $h$ (Step S106), the inputted value is converted into a corresponding actual threshold $h'$. Then, this threshold $h'$ is set to the discrimination function $y$ in SVM constructed in Step S104 (Step S107). Then, the present process is completed.

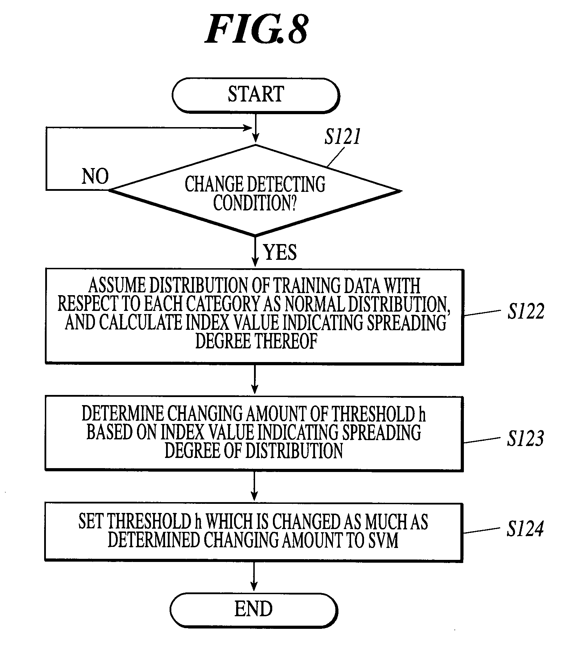

Next, with reference to FIG. 8, a detecting condition changing process according to an automatic change will be described.

In the detecting condition changing process shown in FIG. 8, first, whether an automatic change of a detecting condition is instructed from the environment setting menu is judged (Step S121). If an automatic change of a detecting condition is instructed (Step S121; Y), a distribution of training data belonging to a normal shadow category and a distribution of training data belonging to an abnormal shadow category are assumed as a normal distribution, and an index value indicating a spreading degree of each distribution, such as variance, standard deviation or the like, is calculated (Step S122). Here, the description will be made under the assumption that variance is calculated.

Next, based on the variance calculated as an index value indicating a spreading degree, changing amount of the threshold $h$ is determined (Step S123). Concretely, if a threshold $h$ is calculated according to the following equation 18 generally, a value $h'$ after the threshold h is changed is calculated by the equation 19 in consideration of the calculated variance:

$$\text{(equation 18)} \qquad h = -\frac{1}{2}(w \cdot x_a + w \cdot x_b)$$

where $x_a$ is SV of an abnormal shadow category C1, and $x_b$ is SV of a normal shadow category C2

$$\text{(equation 19)} \qquad h' = \frac{(w \cdot x_a)\sigma_a + (w \cdot x_b)\sigma_b}{\sigma_a + \sigma_b}$$

where $\sigma_a$ and $\sigma_b$ are variances of training data of each of the abnormal shadow category C1 and the normal shadow category C2, respectively

When a category having a wide distribution of normal distribution and a category having a narrow distribution of normal distribution exist together, higher discrimination accuracy can be obtained by moving the discrimination plane toward a side of the narrower category. In other words, since the above-mentioned equation 19 is weighed by variances $\sigma_a$ and $\sigma_b$, and a threshold $h'$ is determined so as to move the discrimination plane H toward a side of category having larger variance, an optimal threshold $h'$ is determined so as to improve the discrimination accuracy.

On the contrary, if the number of false positive training data (it is referred to as FP number) needs to be increased by lowering the discrimination accuracy, a threshold $h'$ is calculated by applying an equation which is weighed by $\sigma_a$ and $\sigma_b$ so as to move the discrimination plane H toward a side of a category having smaller variance.

Next, when a threshold $h'$ is determined, the determined threshold $h'$ is set to a discrimination function $y$ in SVM (Step S124), and the present process is completed.

As above, according to the present embodiment, SVM for discriminating whether a first-detected abnormal shadow candidate is true positive or false positive is constructed based on training data. Therefore, it is possible to determine a discrimination borderline without depending upon a distribution condition of training data or the like. Consequently, discrimination accuracy improves. Further, since soft margin or kernel trick is applied to SVM, it is possible to deal with a nonlinear discrimination. Therefore, it is possible to construct SVM having high discrimination accuracy. In other words, it is possible to improve detection accuracy of an abnormal shadow candidate.

As another nonlinear discrimination method, it is possible to use multilayer neural network and the like. If multilayer neural network is used, since there is a case of setting a discrimination borderline having dimensions higher than necessity according to the number of intermediate layers and repeating number of learning, a discrimination result can depend upon a distribution condition of training data. On the other hand, with SVM, since an optimal discrimination borderline is set according to a distribution condition of training data, it is possible to discriminate each category. Therefore, discrimination accuracy improves.

Further, at the time of constructing SVM, a distance from training data as SV to another training data is calculated in consideration of the variance. Then, if the calculated distance is not less than a predetermined value, SV is recalculated after the corresponding training data as SV is deleted. Therefore, it is possible to delete training data which is inappropriate as SV existing out of a distribution area of the belonging category. Consequently, it is possible to calculate a discrimination function causing less discrimination error. Thereby, for example, even if noise or the like is generated, it is possible to do the detection of an abnormal shadow candidate with the noise removed.

Further, when a manual change of a detecting condition is instructed and a user changes and sets a kernel parameter p or a threshold h, the changed threshold h' is set to SVM which is re-constructed according to the changed kernel parameter p'. Therefore, it is possible for a user to change a detecting condition with an easy operation. Therefore, it is possible to adjust detection accuracy of an abnormal shadow candidate according to user's interpretation style and skill, whereby it is possible to improve interpretation efficiency.

Further, when an automatic change is instructed, an index value indicating a distribution of training data of each of the categories C1 and C2. Then, a threshold h' after the change is determined based on the index value and is set to SVM. Therefore, it is possible to determine an optimal discrimination borderline according to a distribution condition of training data.

Here, the described content in the present embodiment is one suitable example of the medical image processing apparatus 10 to which the present invention is applied. Therefore, the present invention is not limited to the described contents.

In the above, described is the example that support vector machine is applied as multivariate analysis. However, the present invention is not limited to such an example. For example, the judgment may be done in a high dimension space, by using kernel trick in discriminant analysis or principal component analysis.

And so forth, the detailed structure and the detailed operation of the medical image processing apparatus 10 in the present embodiment may be suitably changed without departing the gist of the present invention.

The entire disclosure of a Japanese Patent Application No. 2004-10825, filed on January 19, 2004, including specifications, claims, drawings and summaries are incorporated herein by reference in their entirety.

**Claims**

1. A medical image processing apparatus comprising:

   an abnormal shadow candidate detecting section for discriminating an image area estimated as abnormal shadow in a medical image for detecting the image area as an abnormal shadow candidate, by using a support vector machine using training data; and
   a detecting condition changing section for changing a detecting condition in the abnormal shadow candidate detecting section.

2. The apparatus of claim 1, wherein
   the support vector machine determines a discrimination borderline between abnormal shadow and normal shadow based on the training data by using a discrimination function y which is shown below as an equation 1, and discriminates whether the image area which is a discrimination object is abnormal shadow or normal shadow based on the discrimination borderline, and
   the detecting condition changing section changes a threshold h which determines the discrimination function y in the support vector machine, as a detecting condition,

$$y = sign(\sum_{i \in S} \alpha_i t_i x_i^T x - h) \qquad \text{equation 1}$$

   where $x_i$ is training data determined as a support vector, $\alpha_i$ is a constant calculated by a Lagrange multiplier which is introduced when the support vector is to be calculated, and h is a threshold for parallelly moving the discrimination borderline.

3. The apparatus of claim 2, wherein the detecting condition changing section calculates an index value indicating a spreading degree of a distribution of the training data with respect to each category under an assumption that a distribution of the training data belonging to a normal shadow category and a distribution of the training data belonging to an abnormal shadow category are normal distributions, and determines changing amount of the threshold h of the discrimination function y indicated in the equation 1 based on the index value.

4. The apparatus of claim 3, wherein the index value indicating a spreading degree of a distribution is obtained based on a variance of the distribution.

5. The apparatus of claim 1 or claim 2, wherein the support vector machine uses a kernel trick and determines a discrimination borderline by using a discrimination function y indicated by a following equation 2, the discrimination function y comprising a kernel function K,

$$y = sign(\sum_{i \in S} \alpha_i t_i K(x_i, x) - h) \qquad \text{equation 2.}$$

6. The apparatus of claim 5, wherein
   the kernel function is a Gauss kernel indicated by a following equation 3, and

the detecting condition changing section changes a kernel parameter p in the kernel function as a detecting condition,

$$K(x_1, x_2) = \exp\left( \frac{-\|x_1 - x_2\|^2}{2p^2} \right) \qquad \text{equation 3}$$

where p is the kernel parameter, and $x_1$ and $x_2$ are feature vectors.

**7.** The apparatus of any one of claims 1 to 6, further comprising a constructing section,
wherein, when the training data determined as a support vector with respect to each category by the support vector machine is compared with another training data, if the training data determined as the support vector exists out of a distribution area of another training data, the constructing section deletes the training data determined as the support vector, calculates the support vector and the discrimination function, and constructs the support vector machine.

**8.** The apparatus of claim 7, wherein the constructing section calculates a distance from the training data determined as the support vector to another training data in consideration of each distribution, and
if the calculated distance is not less than a predetermined value, the constructing section judges that the training data determined as the support vector exists out of the distribution area of another training data.

**9.** The apparatus of claim 7, wherein the training data with respect to each category is assumed as a normal distribution, the constructing section calculates a mean and a variance of the normal distribution, and the constructing section judges whether the training data determined as the support vector exists out of a distribution area of another training data based on the calculated mean and variance.

EP 1 557 792 A2

# *FIG.1*

10

```
        ┌──────────────┐
        │     CPU      │──── 11
        └──────┬───────┘
               │
┌──────────┐   │   ┌──────────────┐
│ INPUTTING│   │   │     RAM      │──── 15
│   UNIT   │◄──┼──►│              │
└──────────┘   │   └──────────────┘
  12           │
               │
┌──────────┐   │   ┌──────────────────────┐
│DISPLAYING│   │   │        ROM           │──── 16
│   UNIT   │◄──┼──►│  ┌────────────────┐  │
└──────────┘   │   │  │   ABNORMAL     │  │
  13           │   │  │ SHADOW CANDIDATE│  │
               │   │  │DETECTING PROGRAM│  │
┌──────────────┐   │  └────────────────┘  │
│COMMUNICATING │   │  ┌────────────────┐  │
│    UNIT      │◄──┼──►│   TRAINING    │  │
└──────────────┘   │  │    DATA DB     │  │
  14               │  └────────────────┘  │
               │   └──────────────────────┘
               ▼
```

14

# FIG.2

```
                    ┌─────────────────────┐
                    │        START        │
                    └─────────────────────┘
                               │
                               ▼
        ┌──────────────────────────────────────┐
   S1   │      CALCULATE SV BASED ON           │
        │       TRAINING DATA GROUP            │
        └──────────────────────────────────────┘
                               │
                               ▼
   S2          ╱─────────────────────────╲          YES
              ╱      IS SV APPROPRIATE?    ╲─────────────┐
              ╲                           ╱              │
               ╲─────────────────────────╱               │
                          │ NO                            │
                          ▼                               │
        ┌──────────────────────────────────────┐         │
   S3   │    DELETE INAPPROPRIATE SV            │         │
        │      AND RE-CALCULATE SV             │         │
        └──────────────────────────────────────┘         │
                          │◄──────────────────────────────┘
                          ▼
   S4    NO      ╱─────────────────────────╲
        ┌───────╱      IS SV APPROPRIATE?    ╲
        │       ╲                           ╱
        │        ╲─────────────────────────╱
        │                   │ YES
        │                   ▼
        │      ┌──────────────────────────────────────┐
        │ S5   │       CALCULATE OPTIMAL              │
        │      │  DISCRIMINATION FUNCTION            │
        │      │   HAVING LARGEST MARGIN            │
        │      │      ACCORDING TO SV               │
        │      └──────────────────────────────────────┘
        │                   │
        │                   ▼
        │            ┌─────────────────────┐
        │            │        END          │
        │            └─────────────────────┘
```

# FIG.3

CATEGORY C1

CATEGORY C2

$H$

$2/\|W\|$

$W$

$H2$

$H1$

□   TRAINING DATA BELONGING TO CATEGORY C1

○   TRAINING DATA BELONGING TO CATEGORY C2

▦ , ◉
⊠ , ⊗   SUPPORT VECTOR OF EACH CATEGORY C1 AND C2

# FIG.4A

$\alpha i^{\ddagger}=0$

H1　　H2

CATEGORY C1　　CATEGORY C2

# FIG.4B

$0 < \alpha i^{\ddagger} < \gamma$

H1　　H2

CATEGORY C1　　CATEGORY C2

# FIG.4C

$\alpha i^{\ddagger}=\gamma$

H

H1　　H2

CATEGORY C1　　CATEGORY C2

## FIG.5A

CATEGORY C1

$H$

$x_2$

$x_1$

$d_1$

$x_3$

$x_4$

$x_5$

$x_6$

$x_7$

$x_8$

$x_9$

CATEGORY C2

$\dfrac{d_1}{\sigma} > Z : x_1$ IS INAPPROPRIATE     $\dfrac{d_1}{\sigma} < Z : x_1$ IS APPROPRIATE

## FIG.5B

$-4\sigma$   $m$   $+4\sigma$

x IS OUT OF RANGE OF $m \pm 4\sigma$ : x IS INAPPROPRIATE
x IS WITHIN RANGE OF $m \pm 4\sigma$ : x IS APPROPRIATE

# *FIG.6*

```
              ┌──────────────┐
              │    START     │
              └──────┬───────┘
                     │                    S101
                     ▼
         ┌─────────────────────────┐
   NO ◄──│  CHANGE DETECTING       │
         │  CONDITION?             │
         └───────────┬─────────────┘
                     │ YES
                     ▼
   ┌─────────────────────────────────┐
   │ DISPLAY CHANGING SCREEN         │──── S102
   │ FOR KERNEL PARAMETER p          │
   └─────────────────┬───────────────┘
                     ▼
   ┌─────────────────────────────────┐
   │ INPUT DESIRED PARAMETER VALUE   │──── S103
   └─────────────────┬───────────────┘
                     ▼
   ┌─────────────────────────────────┐
   │ CONSTRUCT SVM BASED ON          │──── S104
   │ INPUTTED PARAMETER VALUE        │
   └─────────────────┬───────────────┘
                     ▼
   ┌─────────────────────────────────┐
   │ DISPLAY CHANGING SCREEN         │──── S105
   │ FOR THRESHOLD h                 │
   └─────────────────┬───────────────┘
                     ▼
   ┌─────────────────────────────────┐
   │ INPUT DESIRED THRESHOLD h       │──── S106
   └─────────────────┬───────────────┘
                     ▼
   ┌─────────────────────────────────┐
   │ SET THRESHOLD h' CORRESPONDING  │──── S107
   │ TO VALUE OF INPUTTED            │
   │ THRESHOLD h TO SVM              │
   └─────────────────┬───────────────┘
                     ▼
              ┌──────────────┐
              │     END      │
              └──────────────┘
```

# FIG.7

CHANGE DETECTING CONDITION

PARAMETER 1

80.0 ▲▼ OK

WHEN PARAMETER 1 DECREASES, NUMBER OF DETECTED CANDIDATES INCREASES, WHILE FP NUMBER ALSO INCREASES.

WHEN PARAMETER 1 INCREASES, ONLY HIGHLY-RELIABLE CANDIDATES ARE DETECTED.

# FIG.8

```
                    ┌─────────────┐
                    │    START    │
                    └──────┬──────┘
                           │
        ┌──────────────────┤  S121
        │              ╱───┴───╲
        │        ╱─────────────────╲
      NO │    ╱   CHANGE DETECTING   ╲
        │    ╲      CONDITION?       ╱
        │        ╲─────────────────╱
        │              ╲───┬───╱
        │                  │ YES
```

ASSUME DISTRIBUTION OF TRAINING DATA WITH RESPECT TO EACH CATEGORY AS NORMAL DISTRIBUTION, AND CALCULATE INDEX VALUE INDICATING SPREADING DEGREE THEREOF — S122

DETERMINE CHANGING AMOUNT OF THRESHOLD h BASED ON INDEX VALUE INDICATING SPREADING DEGREE OF DISTRIBUTION — S123

SET THRESHOLD h WHICH IS CHANGED AS MUCH AS DETERMINED CHANGING AMOUNT TO SVM — S124

```
                    ┌─────────────┐
                    │     END     │
                    └─────────────┘
```